# EUROPEAN PATENT APPLICATION

(11) **EP 4 410 714 A1**
(43) Date of publication of application: **07.08.2024**
(21) Application number: 23155017.9
(22) Date of filing: 06.02.2023
(51) Int. Cl.: B65G 15/32, B65G 43/02

(54) **CONVEYOR BELT COMPRISING LAMINATED PRINTED MAGNETIC RIP INSERT STACK**

(71) Applicant: ContiTech Deutschland GmbH, 30165 Hannover (DE)
(72) Inventor: Kneer, Janosch, 30165 Hannover (DE); Kegel, Isabell, 30165 Hannover (DE); Schleuniger, Juerg, 30165 Hannover (DE); Dr. Minkin, Andrey, 30165 Hannover (DE); Podias, Stavros, 30165 Hannover (DE); Bäuerle-Müller, Christel, 30165 Hannover (DE); Dr. Seibold, Sebastian, 30165 Hannover (DE)
(74) Representative: Continental Corporation

(57) **Abstract**

A conveyor belt, comprising a printed magnetic rip insert is disclosed. A conveyor belt may include a plurality of printed rip insert elements. A conveyor belt may include a flexible substrate. A conveyor belt may include a magnetic material printed on the substrate. A conveyor belt may include a protective and/or adhesion layer formed over the magnetic material. A conveyor belt may include a substrate layer comprised of a transparent or partially transparent polymer. A conveyor belt may further comprise a bonding layer configured to adhere the substrate to a cover layer.

## Description

### FIELD

The field to which the disclosure generally relates is rubber, thermoplastic elastomers (e.g., TPE, PET) and/or elastomeric products, such as conveyor belts, exposed to harsh conditions.

### BACKGROUND

Conveyor belts are often used to convey material from one location to another and commonly contain covers made of a rubber, PVC, TPE (e.g., TPU, TPV) and other materials, which protect a tension member inside. The conveyor belt can be an endless design and loop about a plurality of drives and/or pulleys.

Conveyor belts are widely used for moving minerals, coal, and a wide variety of manufactured products from one point to another. Heavy-duty conveyor belts used in mining operations can extend over distances of several miles and represent a high cost component of an industrial material handling operation. Unfortunately, such conveyor belts are susceptible to damage from the material transported thereon and a rip, slit, cut or tear may develop within the belt. For instance, sharp edges of the material being transported or a piece of metal inside of the material can gouge the surface of the belt and that can result in a rip developing.

After being detected a torn or ripped belt can be repaired. However, the cost of repairing a heavy-duty conveyor belt and cleaning up material spilled as a result of the damage can be substantial. In cases where such damage is not detected and repaired promptly, the rip typically propagates along the length of the belt with continued use of the conveyor system which makes the repair even more difficult and costly. It is accordingly desirable to detect damage to the belt as soon as possible after it occurs and to quickly repair the damaged area of the belt. By doing so the extent of the damage to the belt can be minimized and the spillage of material being conveyed can be reduced.

Over the years, a number of systems have been developed for detecting belt damage and for automatically stopping further movement of the belt after the damage occurs. One system is to employ sensors within conveyor belts as part of a rip detection system. Sensors in the form of loops of conductive wire are affixed or embedded in the belt and provide a rip detection utility as part of an overall rip detection system. Rip detection is achieved through the inferential detection of an "open circuit" condition in one or more of the sensor loops in the belt. Typically, an electrical energy source external to the belt is inductively or capacitively coupled to a sensor loop in the belt. A break in the conductive wire loop of the sensor may be detected by a remote transmitter/receiver (exciter/detector). Disposition of a plurality of such sensors at intervals along the conveyor may be detected with each sensor passing within read range of one or more exciter/detectors at various locations. A rip or tear will encounter and damage a proximal sensor loop and the existence of the tear will be inferred when the proximal sensor loop damage is not detected due to being in an open circuit condition when it passes by the reader. In this manner, the existence of a tear will be promptly detected and repaired with further damage to the belt being minimized.

A similar method of monitoring for longitudinal rips was developed using magnetic sensors that detect magnetically permeable rip inserts that are embedded into the conveyor belt. If the disposition of a plurality of such sensors at intervals along the conveyor, it is possible to monitor for longitudinal damage events by detecting damage to these rip inserts. These sensors have advantages over inductive loops in that the damage is directly detected in the magnetic field image generated by the passing rip insert, as opposed to the inductive loops which depend on the "non-detection" of a loop at a given location to generate an alarm. This active detection of the damage also provides the user with information about the damage, magnitude and location. This is important to reduce the time it takes to locate and inspect the damage event, saving the mine downtime associated with this activity.

Typical rip inserts rely on sensor wires to be embedded in the conveyor belt to generate a magnetic signature that is detectable over the signal of the conveyor belt using magnetic field sensors, such as, magnetorestrictive, inductive coils or hall effect sensors. These wire based sensors have a defined gauge associated and this gauge can require a larger/thicker pulley cover than otherwise to handle the defined gauge. Furthermore, these rip inserts are produced in a separate process from the belt manufacturing process, and thus require to be inserted into the belt during manufacture in an added step, adding to manufacturing time and potentially impacting the quality of the belt.

Accordingly, there is a need to provide improved printed magnetic rip insert element stacks for conveyor belts.

### BRIEF DESCRIPTION OF THE DRAWINGS

FIG. 1 shows an example of a conveyor belt system 100 configured in an endless loop or belt.
Fig. 2 is a diagram illustrating a schematic view 200 a rip insert element of the conveyor belt system 100 in accordance with one or more embodiments.
Fig. 3 is a diagram illustrating a magnetic rip element stack 300, 110 for use as a printed sensor in the system 100 in accordance with one or more embodiments.
Fig. 4 is a diagram illustrating a magnetic rip element stack 400, 110 for use as a printed sensor in the system 100 in accordance with one or more embodiments.
Fig. 5 is a diagram illustrating a magnetic rip element stack 500, 110 for use as a printed sensor in the system 100 in accordance with one or more embodiments.
Fig. 6 is a diagram illustrating another magnetic rip element stack 600, 110 for use as a printed belt sensor in the system 100 in accordance with one or more embodiments.
Fig. 7 is a diagram illustrating yet another magnetic rip element stack 700, 110 for use as a printed sensor in the system 100 in accordance with one or more embodiments.
Fig. 8 is a diagram illustrating another magnetic rip element stack 800, 110 for use as a printed sensor in the system 100 in accordance with one or more embodiments.
Fig. 9 is a diagram illustrating another magnetic rip element stack 900, 110 for use as a printed sensor in the system 100 in accordance with one or more embodiments.
Fig. 10 is a diagram illustrating a conveyor belt 102,1000 having steel reinforcements and magnetic rip element stacks 1004 in accordance with one or more embodiments.
Fig. 11 is a diagram illustrating a conveyor belt 102,1100 having fabric reinforcements and magnetic rip element stacks 1004 in accordance with one or more embodiments.

### DETAILED DESCRIPTION

The following description of the variations is merely illustrative in nature and is in no way intended to limit the scope of the disclosure, its application, or uses. The description is presented herein solely for the purpose of illustrating the various embodiments of the disclosure and should not be construed as a limitation to the scope and applicability of the disclosure. In the summary of the disclosure and this detailed description, each numerical value should be read once as modified by the term "about" (unless already expressly so modified), and then read again as not so modified unless otherwise indicated in context. Also, in the summary of the disclosure and this detailed description, it should be understood that a value range listed or described as being useful, suitable, or the like, is intended that any and every value within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific data points, it is to be understood that inventors appreciate and understand that any and all data points within the range are to be considered to have been specified, and that inventors had possession of the entire range and all points within the range.

Unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of concepts according to the disclosure. This description should be read to include one or at least one, and the singular also includes the plural unless otherwise stated.

The terminology and phraseology used herein is for descriptive purposes and should not be construed as limiting in scope. Language such as "including", "comprising", "having", "containing", or "involving", and variations thereof, is intended to be broad and encompass the subject matter listed thereafter, equivalents, and additional subject matter not recited.

Also, as used herein, any references to "one embodiment" or "an embodiment" means that a particular element, feature, structure, or characteristic described in connection with the embodiment is included in at least one embodiment. The appearances of the phrase "in one embodiment" in various places in the specification are not necessarily referring to the same embodiment.

It is appreciated that prior art rip insert sensors are typically made of wire which is manually sized, embedded and covered up resulting in a package which is further integrated and embedded into rubber belts by opening/re-working the belt at the desired spot an under usage of certain primer materials, heat and pressure.

This manufacturing process is a multiple step manual manufacturing process, costly and time consuming. In this regard, the manual assembly process also does not allow for much flexibility in designing, tailoring or improving the rip insert shape, conformation and layout.

The assembled packages of rip insert wires are somewhat bulky, i.e. they encounter a certain height and stiffness and thus the spots in the conveyor belt, where they have been re-worked and integrated into are inherently prone for failure.

It is further appreciated that the current rip insert technology is fabricated in an in-line process where small magnetically permeable material (wires) are embedded parallel to one another in a sheet of rubber. These sheets are cut joined in a fashion to create a biased design where wires are exposed on every edge of a trapezoidal shape. This allows for numerous wires to be installed in the belt at a 45 degree bias in order to cover the width of the belt such that if a longitudinal rip event occurs that a series of wires will be damaged and create a magnetic signal that can be detected by a Hall Effect sensor array monitoring the width of the belt. This is a rather cumbersome secondary manufacturing process outside of the belt manufacturing processes.

Further, current rip inserts rely on sensor wires to be embedded in the conveyor belt to generate a magnetic signature that is detectable over the signal of the conveyor belt using hall effect sensors. These wire-based sensors have a defined gauge associated and this gauge can require a larger/thicker pulley cover than otherwise to handle the defined gauge.

Additionally, installing the wire based rip inserts is problematic. Typically, fabrication time of the conveyor belt is increased as these rip inserts are embedded into the belt. Substantial manufacturing time can be added to the belts manufacturing process by with the installation of these rip inserts. In conveyor belts with thin covers, these wire-based inserts can impact the performance of the conveyor belt as they take a significant amount of the pulley covers thickness, limiting the protection of the rip insert by the rubber or elastomeric cover. In an effort to remove this dimensional restriction, low profile printed rip inserts are proposed as a solution.

Integrating the printed magnetic rip insert element stack into a conveyor belt can consider several guidelines, as shown below.
(1) Safeguarding and prevent deterioration of the magnetic rip insert structure, e.g. protect towards scratches, delamination or degradation of magnetic properties due to impurities or surface reactions.
(2) Achieve a given retention force, i.e. achieve necessary adhesion between the used layer materials.
(3) Take into account the outer interface symmetry, i.e. both top and bottom outer side of the rip insert stack have to be equal to embed into the conveyor belt. Furthermore, this interface has to adhere with certain palette of bonding layers to adhere the stack to the overlying and underlying belt layers, e.g. the cover or bottom plate used in conveyor belts. Taking into account that the belt can be composed from rubber materials or TPE (thermoplastic elastomeric) materials (including amongst others TPU, TPV). In case of TPE-belts this bonding layer can be made of adhesive films (e.g. TPU-hotmelt films etc.), or of TPE-adhesive powders or of a liquid one-or two component, moisture curing reactive adhesives (e.g. 1K-PU). In case of rubber belts this bonding layer e.g. can be made of bonding rubber.
(4) The assembled magnetic rip insert, i.e. the material system built-up has to withstand and work with the further belt manufacturing process, especially the vulcanization or other heat or pressure impacts.

One or more embodiments are provided that incorporate a magnetic rip insert stack as sensor for rip detection in conveyor belts and the like.

They provide effective, functional assembly and component functionality.

PET and TPE (e.g. TPU, TPV etc.) can be used as a favorable substrate in terms of the functional magnetic material.

PET and TPE sheets are convenient interfaces for the bonding layer and outer adhesion promotion and are of lower cost of manufacture and easy automated fabrication. Further, they are independent of design complexity, favoring tailoring or customization. Additionally they are advantageous in view of lower dimensional cross section, lower stiffness, leaner integration, potential to reduce mechanical weakness at integration spots and the ability to apply in-line with belt production processes (improved responsiveness and less impact to production efficiencies (i.e. less downtime due to sensor integration.

For the mentioned safeguarding of the magnetic material, a UV curable varnish can be used whereas UV linkage and hardening is performed after the upper substrate (PET or TPE) layer is placed and thus fulfilling (1) the safeguarding and protection and at the same time (2) a necessary adhesion between the upper and lower substrate (PET or TPE), whereat the upper PET or TPE (3) provides an outer interface symmetry and establishes suitable adhesion to the conveyor belt (e.g., rubber belt). There are other materials which may act as safeguarding and adhesion promotor, such as glues, hot melts, epoxies or solid adhesive films

Thus, the mentioned layer set-up in combination with the assembly process is fulfilling mentioned demands.

After embedding and vulcanization (PET) or a lamination (TPE) the printed magnetic rip insert is still functioning in terms of signaling.

The one or more embodiments include an example of a suitable workflow of the assembly:
Preparation of PET or TPE sheet of desired size - Printing using magnetic ink - Thermal curing of printed rip insert- Printing of UV varnish - aligned laying of second/upper PET or TPE sheet - adding small cuts in upper PET or TPE sheet to prevent air entrapment/bubbles (optional) - laminating the assembled stack with roller - UV curing of stack to obtain adhesion.

It is appreciated that some applications, such as those that encounter functional, magnetic layers and demand symmetry of that functional layer to integrate, i.e. may require both-sided equal outer interfaces of PET or similar (e.g., TPE) sheet substrate materials, where functional dielectric layers secure protection and adhesion at the same time.

It is appreciated that a convention rip insert includes wires and typically has thicknesses of 0.5 mm to 3.0 mm. This amount includes the overall gauge of the wires and the treatment that holds the position of the wires. The treatment is typically an extrusion of rubber around the parallel wires spaced at a given pitch in order to produce a rip insert of the desired dimensions to generate the desired magnetic properties for the application.

The printed rip insert and corresponding elements have example/suitable thicknesses in the range of 0.05 mm to 2 mm. It should be pointed out that this range covers a single printed layer to a large stack of printed patterns that can generate the desired magnetic field for reliable damage detection in a conveyor application.

Multiple inserts may have parallel elements aligned at an angle.

A single stack printed rip insert may have a single layer of printed elements.

A multi-stack printed rip insert may have a plurality of layers of printed elements.

The magnetic strength may be increased by having multiple layers of printed magnetic elements.

The printed rip insert preferably consists of a layer of magnetizable material and a substrate, e.g. a polymer foil or an elastomeric patch or a rubber patch. In a beneficial design the substrate is of similar or same material than the adjacent interfaces the printed rip insert is embedded towards.

The printed rip insert can further consist of additional layers, e.g. for encapsulation or lamination purpose like UV-curable vanish, hot melts, adhesive films, liquid one-or two component reactive adhesives, elastomeric foils made of thermoplastic elastomers (TPEs, PET etc.) or rubber.

As stated above, a printed rip insert may include a plurality of elements which are printed on substrates and/or layers of conveyor belts.

A single layer stack printed element may have a single printed layer of ferromagnetic material.

A double stack element may have first and second printed layers of ferromagnetic material and there may be an offset or gap between the layers.

A triple stack element may have three printed layers of ferromagnetic material and there may be an offset or gap between the layers.

It is appreciated that printed rip inserts having other suitable numbers of layers to form stacks have varied numbers of layers are contemplated.

Individual printed layers can be connected using one or more suitable techniques.

One technique includes forming a stack of printed rip insert by folding a layer printed magnetizable material and cutting the seam.

Other stacking techniques include seaming individual printed rip inserts, laminating, fusing, ultrasonic welding.

An exemplary technique of printing a rip insert onto a conveyor includes the following. The method is provided for illustrative purposes and it is appreciated that suitable variations are contemplated.

The method includes pre-treatment of a flexible substrate comprised of an elastomeric material and/or rubber. The pre-treatment adapts a surface of the substrate to facilitate adhesion of printed material(s).

Magnetic materials are printed or coated onto the treated surface. A suitable printing or casting technology, such as screen printing, coating, slot die coating, k-bar coating and the like can be used.

The magnetic materials can be formed as a stack comprising one or more layers of material where each layer is connected to adjacent layers.

The magnetic materials are polarized. The materials can be polarized in a wet state or a dry state.

The magnetic materials are post treated. For example, the post treatment can include baking, annealing, cross linking by heat, photo-crosslinking and the like.

Portions of the magnetic materials can be cut or removed.

The magnetic materials can be used as a printed rip insert element for rip detection and the like.

Printing and casting technologies can vary in terms of how the pattern is achieved, such that various printing and casting techniques and combinations of techniques can be utilized and not limited example techniques such as 3D printing, ink jet printing, screen printing, rotary printing, slot die coating, doctor blade coating and the like. It is appreciated that the choice of printing technique can be based on properties and nature of the magnetic rip insert and can also be based on framework aspects such as production space, existing machinery and/or output volume.

In one suitable example, a printing technique utilizes an ink or paste containing magnetizable materials. Magnetizable materials may include ferromagnetic metal particles such as nickel, cobalt, amongst others, metal oxides such as iron oxide, magnetic alloys such as Nd₂Fe₁₄B and ferrites such as CoFe₂O₄, or mixtures of the above mentioned. These magnetizable materials may be transferred towards the described substrate materials by printing technologies listed above. Afterwards a post-treatment may be performed. The post-treated may comprise radiation methods such as, thermal, electromagnetic or light induced (such as infrared, UV, photo sintering) or thermal conduction methods such as hot plate placement to encounter for proper morphology in terms of uniformity, porosity and general mechanical properties (such as adhesion and film thickness). Printing step can be singular or performed multiple times consecutively, whereas the post-treatment step may follow consecutively after every print step or after multiple printing steps ("wet-on-wet print").

As described above, the printed rip inserts could be produced in a similar off-line process and installed in the conveyor belt as a secondary process, similar to the wire-based inserts. However, it is envisioned that these printed rip inserts could be applied during an in-line process that could eliminate the need to embed the sensor into the belt during manufacture but instead automatically print the sensor in the appropriate location during the manufacturing process. In this case, care must be taken to select the appropriate substrate (belt material) that will allow for the printing and curing process to be done without generating adhesion or other belt manufacturing or performance issues.

The printed rip insert may be cured in presence of a magnetic field to influence or modify the rip inserts magnetic properties in terms of magnetic strength or polarization direction in order to improve the rip inserts detectability and hence field performance.

In some aspects, the techniques described herein relate to a printed rip insert element for a conveyor belt including: a flexible substrate; and a magnetic material printed on the substrate.

In some aspects, the techniques described herein relate to an insert element, the substrate including one of rubber and elastomeric material.

In some aspects, the techniques described herein relate to an insert element, the magnetic material formed as a stack of one or more ferromagnetic layers.

In some aspects, the techniques described herein relate to an insert element, the ferromagnetic layers connected by a plurality of folds.

In some aspects, the techniques described herein relate to an insert element, the magnetic material configured to have a first polarization.

In some aspects, the techniques described herein relate to an insert element, further including a second insert element having a unique polarization distinguishable from a polarization of the insert element.

In some aspects, the techniques described herein relate to an insert element, the magnetic material configured to generate parallel magnetic field lines in relation to one or more other insert elements.

In some aspects, the techniques described herein relate to an insert element, the magnetic material configured to generate non-parallel magnetic field lines in relation to one or more other insert elements.

In some aspects, the techniques described herein relate to an insert element, further including a protective layer formed over the magnetic material.

In some aspects, the techniques described herein relate to a conveyor belt monitoring system including: a plurality of printed rip insert elements on a substrate of a conveyor belt; a field generator for generating a magnetic field proximate to the printed rip insert elements; and a detector for detecting an image of a magnetic field produced by the plurality of printed rip inserts.

In some aspects, the techniques described herein relate to a system, further including circuitry configured to monitor the magnetic field and identify damage to the conveyor belt based on the detected image of the magnetic field.

In some aspects, the techniques described herein relate to a system, the rip insert elements configured to generate parallel fields with each other.

In some aspects, the techniques described herein relate to a system, the rip insert elements including a plurality of parallel lines.

In some aspects, the techniques described herein relate to a method of forming a printed rip insert for a conveyor belt, the method including: adapting a surface of a substrate for adhesion of a magnetic material; forming a magnetic material on the adapted surface; forming a protective layer over the magnetic material; and polarizing the magnetic material.

In some aspects, the techniques described herein relate to a method, further including forming an intermediate layer over the magnetic material and forming a second magnet material over the intermediate layer.

One or more embodiments are disclosed that utilize printed rip inserts having printed elements.

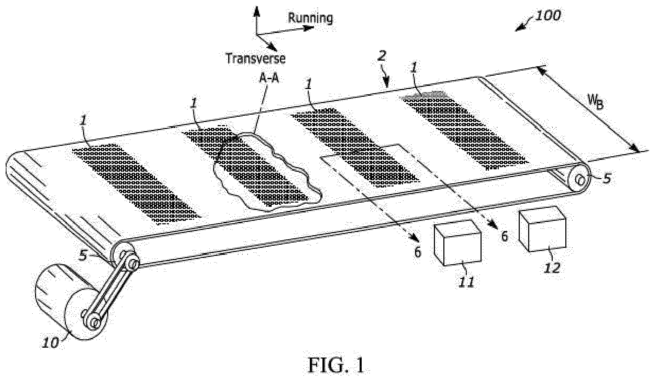

Fig. 1 is a diagram illustrating a conveyor belt system 100 using printed rip inserts in accordance with one or more embodiments. The system 100 is provided for illustrative purposes and it is appreciated that suitable variations are contemplated.

The system 100 includes a pulley system 5 which is adapted for receiving a pulley engaging surface of belt(s) 2 of this invention, a drive mechanism 10 for driving the belt 2 along the pulley system 5, a field generator 11 for generating a magnetic field within the printed rip inserts 1, and a detector 12 for detecting the image of the magnetic field produced by printed rip inserts 1.

The image of the magnetic field is typically detected over the entire width of the belt 2. In order to determine the length of a rip detection panel a tachometer, proximity sensor, encoder and/or the like can be incorporated into the system 100.

The printed rip inserts 1 have mitigated exposure to environmental conditions, such as moisture and avoid/mitigate degradation such as rust and the like.

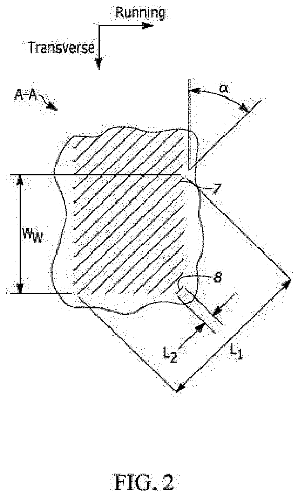

Fig. 2 is a diagram illustrating a portion A-A of the conveyor belt system 100 using printed rip inserts in accordance with one or more embodiments. It is appreciated that suitable variations are contemplated.

Rip detection elements 8 are aligned in the rip detection inserts 1 at a bias angle α, for example 15° to 75°, from being perpendicular to the longitudinal direction of the belt 2, in this example.

The rip detection elements 8 are spaced incrementally across the width of the belt WB in this example. In one example, individual rip detection elements do not extend across more than about 70% of the width of the belt WW. In some cases individual rip detection elements do not extend across more than about 50% of the width of the belt WW. More typically individual rip detection elements do not extend across more than about 40% or even 30% of the width of the belt WW.

In one example, the rip insert elements 7,8 vary in length along a line running through the rip detection inserts 1 which is perpendicular to the bias angle α, and wherein the shortest rip detection wires 8 have a length L2 which is less than about 50% of the length L1 of the longest rip detection elements 7 in the rip inserts 1. Typically, the shortest rip detection elements have a length L2 which is less than about 25% of the length L1 of the longest rip detection elements. In some cases the shortest rip detection elements have a length L2 which is less than about 10% of the length L2 of the longest rip detection elements in the rip detection inserts 1.

It is appreciated that a convention rip insert includes wires and typically has thicknesses of 0.5 mm to 3.0 mm. This amount includes the overall gauge of the wires and the treatment that holds the position of the wires. The treatment is typically an extrusion of rubber around the parallel wires spaced at a given pitch in order to produce a rip insert of the desired dimensions to generate the desired magnetic properties for the application.

The printed rip insert 1 and corresponding elements 7,8 have example/suitable thicknesses in the range of 0.05 mm to 2 mm. It should be pointed out that this range covers a single printed layer to a large stack of printed patterns that can generate the desired magnetic field for reliable damage detection in a conveyor application.

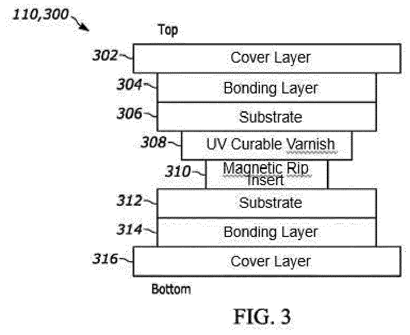

Fig. 3 is a diagram illustrating a magnetic rip element stack 300, 110 for use as a printed sensor in the system 100 in accordance with one or more embodiments. The stack 300 is provided for illustrative purposes and it is appreciated that suitable variations are contemplated.

The below stacks may be shown without reinforcement for illustrative purposes. However, it is appreciated that reinforcements, such as steel cords and/or fabric plies, may be present.

The stack 300 includes a magnetic rip insert 310 printed on a substrate 312. The insert 310 comprises a magnetic or magnetizable material, such as ferromagnetic metal particles such as nickel, cobalt, amongst others, metal oxides such as iron oxide, magnetic alloys such as Nd2Fe14B and ferrites such as CoFe2O4, or mixtures of the above mentioned.

The substrate 312 (lower substrate) is comprised of a suitable substrate material. Examples of suitable substrate materials include Polyethylene terephthalate (PET), thermoplastic elastomers (TPE), which include, but not limited thermoplastic polyurethane (TPU), thermoplastic vulcanizates (TPV) and the like. In one example, the substrate material is a PET material for use with rubber conveyor belts. In another example, the substrate material is TPE for TPE conveyor belts.

The magnetic rip insert 310 is covered with a protective layer 308, such as an ultraviolet (UV) curable varnish and/or the like.

An upper substrate 306 is formed over the protective layer 308 and is comprised of the suitable substrate material.

The magnetic rip insert 310 can be cured by a suitable process, such as a thermal process. Cuts and/or gaps can be formed in the upper substrate 306 to mitigate air entrapment, bubbles and the like.

An upper bonding layer 304 is formed on the upper substrate 306 and a lower bonding layer 314 is formed on the lower substrate. The bonding layers 304, 314 are comprised of a suitable bonding material. For rubber belts, the bonding material can be made of a Scimm (Bonding) Rubber. In case of TPE-belts the bonding layer can also be made of adhesive films (e.g., TPU-hotmelt films etc.), of TPE-adhesive powders, a liquid one-or two components, moisture curing reactive adhesives (e.g. 1K-PU), and/or the like.

An upper (top) cover layer 302 is formed on the bonding layer 304 and a lower cover (bottom) layer 316 is formed on the bonding layer 314.

In one example, the assembled stack 300, 110 is rolled and UV cured after assembly to facilitate adhesion.

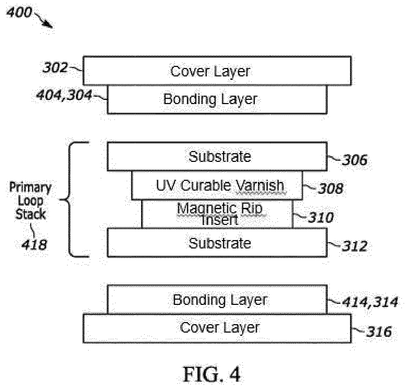

Fig. 4 is a diagram illustrating a magnetic rip element stack 400, 110 for use as a printed sensor in the system 100 in accordance with one or more embodiments. The magnetic rip element stack 400 is provided for illustrative purposes and it is appreciated that suitable variations are contemplated.

The magnetic rip element stack 400 is similar to the stack 300.

Here, the stack 400 includes a primary rip element stack 418 that includes the upper substrate 306, the protective layer 308, the magnetic rip insert 310 and the lower substrate 312.

The upper substrate 306 has a thickness typical of foils in the range of 10 to 250 micrometers, the protective layer 308 has a thickness of 1 to 20 micrometers, the printed magnetic rip insert has a thickness of 100 nanometers to 20 micrometers and the lower substrate 312 has a thickness typical of foils in the range of 10 to 250 µm.

It is appreciated that other suitable dimensions are contemplated.

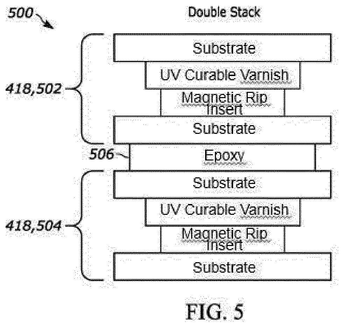

Fig. 5 is a diagram illustrating a magnetic rip element stack 500, 110 for use as a printed sensor in the system 100 in accordance with one or more embodiments. The magnetic rip element stack 500 is provided for illustrative purposes and it is appreciated that suitable variations are contemplated.

The magnetic rip element stack 500 is a double stack and includes a first stack 502 and a second stack 504.

Here, an epoxy layer 506 binds the lower substrate of the first stack 502 to an upper substrate of the second stack.

It is appreciated that the magnetic rip element stack 500 can be extended to other suitable examples, such as a four-fold full primary stack.

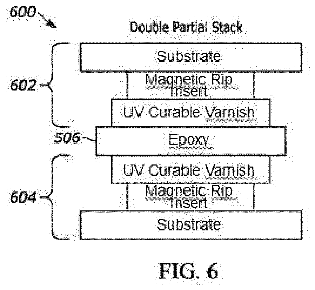

Fig. 6 is a diagram illustrating another magnetic rip element stack 600, 110 for use as a printed sensor in the system 100 in accordance with one or more embodiments. The magnetic rip element stack 600 is provided for illustrative purposes and it is appreciated that suitable variations are contemplated.

The magnetic rip element stack 600 is similar to the stack 500 and includes a first stack 602 and a second stack 604 bound by the epoxy layer 506.

However, a lower substrate of the first stack 602 and an upper substrate of the second stack 604 are omitted.

The result is a more compact double stack.

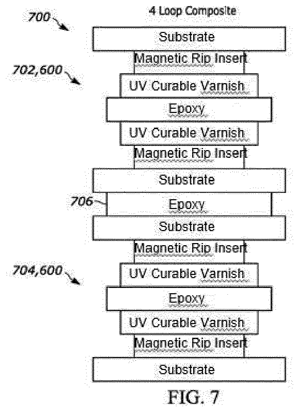

Fig. 7 is a diagram illustrating yet another magnetic rip element stack 700, 110 for use as a printed sensor in the system 100 in accordance with one or more embodiments. The magnetic rip element stack 700 is provided for illustrative purposes and it is appreciated that suitable variations are contemplated.

The composite stack 700 includes 4 magnetic rip inserts and comprises a first double stack 702, 600 and a second double stack 704, 600. The double stacks 702,704 are based on the double stack 600 shown in Fig. 6.

Here, an epoxy layer 706 binds or attaches the first double stack 702 and the second double stack 704.

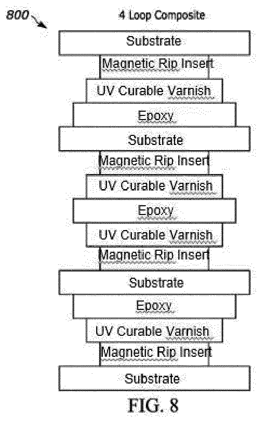

Fig. 8 is a diagram illustrating another magnetic rip element stack 800, 110 for use as a printed sensor in the system 100 in accordance with one or more embodiments. The magnetic rip element stack 800 is provided for illustrative purposes and it is appreciated that suitable variations are contemplated.

The stack 800 is also a composite stack having 4 rip insert elements and comprising first and second double stacks.

The double stacks have a first magnetic rip insert printed on an upper substrate (PET or TPE) layer and a second magnetic rip insert printed on a second upper substrate (PET or TPE) layer.

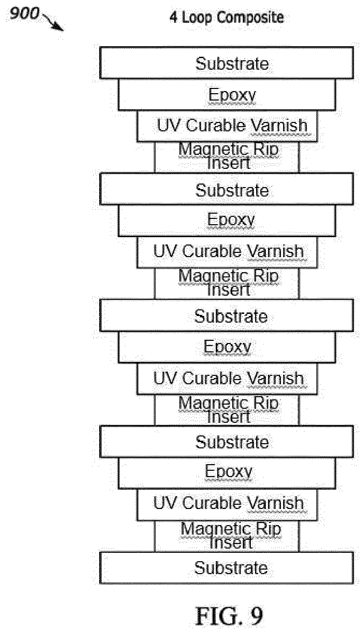

Fig. 9 is a diagram illustrating another magnetic rip element stack 900, 110 for use as a printed sensor in the system 100 in accordance with one or more embodiments. The magnetic rip element stack 900 is provided for illustrative purposes and it is appreciated that suitable variations are contemplated.

The stack 900 is a composite stack having 4 magnetic rip insert layers as shown. The magnetic rip inserts are formed on lower substrates in this example.

It is appreciated that other suitable composite stacks are contemplated.

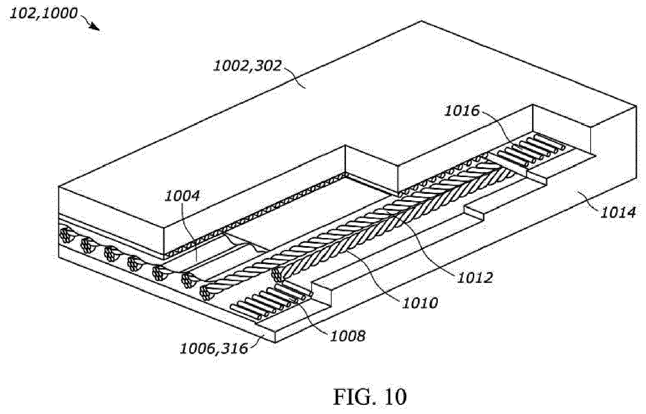

Fig. 10 is a diagram illustrating a conveyor belt 102,1000 having steel reinforcements and magnetic rip element stacks 1004 in accordance with one or more embodiments.

The belt 1000 includes a top cover layer 302, transverse reinforcements 1016, longitudinal steel reinforcements 1010,1012, second transverse reinforcements 1008, a second/lower (bottom) cover layer 1006,316 and edges 1014.

The magnetic rip element stack 1004 is over the steel cables 1010,1012 and below the cover layer 302 in this example. It is appreciated that the magnetic rip element stack 1004 can be inserted on and/or between the other layers.

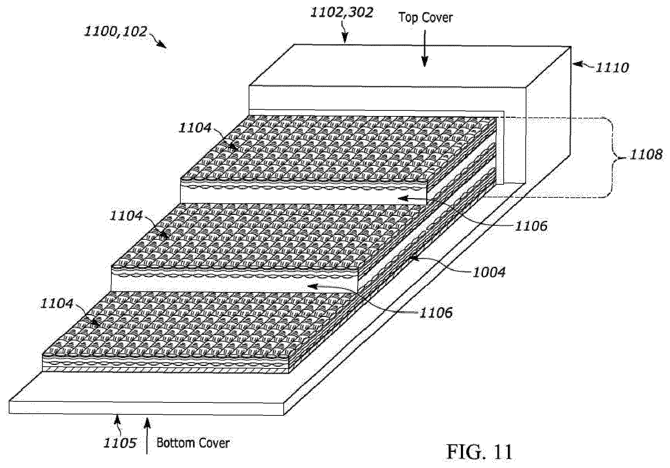

Fig. 11 is a diagram illustrating a conveyor belt 102,1100 having fabric reinforcements and magnetic rip element stacks in accordance with one or more embodiments.

The belt 1100 includes a top cover layer 1102,302 and a stack 1108 of fabric reinforcement layers 1104 known as a "belt carcass" and adhesive layers 1106 and bottom cover layer 1105.

A magnetic rip element stack 1004 is inserted between the belt carcass 1108 and the bottom cover 1105 in one example. It is appreciated that the stack 1004 can be inserted on and/or between the other layers.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first", "second", and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially-relative terms, such as "inner", "adjacent", "outer", "beneath", "below", "lower", "above", "upper", and the like, may be used herein for ease of description to describe one element or feature's relationship to another element(s) or feature(s) as illustrated in the figures. Spatially-relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially-relative descriptors used herein interpreted accordingly.

Although a few embodiments of the disclosure have been described in detail above, those of ordinary skill in the art will readily appreciate that many modifications are possible without materially departing from the teachings of this disclosure. Accordingly, such modifications are intended to be included within the scope of this disclosure as defined in the claims.

## Claims

1. Conveyor belt comprising at least one printed magnetic rip insert element stack, wherein the at least one printed magnetic rip insert element stack comprises a magnetic material printed on a substrate, and wherein the at least one printed rip insert element is incorporated within the conveyor belt.

2. The conveyor belt of claim 1, the substrate comprising one of rubber and elastomeric material.

3. The conveyor belt of claim 1, the magnetic material formed as a stack of one or more ferromagnetic layers.

4. The conveyor belt of claim 3, the ferromagnetic layers connected by a plurality of folds.

5. The conveyor belt of claim 1, the magnetic material configured to have a first polarization.

6. The conveyor belt of claim 1, the magnetic material configured to generate parallel magnetic field lines in relation to one or more other insert elements.

7. The conveyor belt of claim 1, the magnetic material configured to generate non-parallel magnetic field lines in relation to one or more other insert elements.

8. The conveyor belt of claim 1, further comprising a protective and/or adhesion layer formed over the magnetic material.

9. The conveyor belt of claim 1, the substrate layer comprised of a transparent or partially transparent polymer.

10. The conveyor belt of claim 1, further comprising a secondary printed rip insert element stack comprising a magnetic material printed on a substrate.

11. The conveyor belt of claim 1, further comprising one or more printed rip insert element stacks comprising a magnetic material printed on a substrate.

12. The conveyor belt of claim 1, the printed rip insert element stack integrated between a cover layer and a belt carcass - longitudinal steel reinforcement cables or a stack of fabric reinforcement layers.

13. The conveyor belt of claim 1, the printed rip insert element stack positioned adjacent transverse cable reinforcements.

14. The conveyor belt of claim 1, the printed rip insert element stack positioned adjacent a fabric reinforcement layer.

15. The conveyor belt of claim 1, the substrate comprising a polyethylene terephthalate (PET) or a thermoplastic elastomer (TPE) and the conveyor belt is comprised of rubber or of TPE.
